# EUROPEAN PATENT APPLICATION

(11) **EP 4 230 053 A1**
(43) Date of publication of application: **23.08.2023**
(21) Application number: 21883387.9
(22) Date of filing: 12.03.2021
(51) Int. Cl.: A23J 3/14, A23J 1/12, A23L 2/38, B09B 3/00, B02C 13/00, C12C 7/28, B02C 23/08

(54) **PROTEIN BEVERAGE MADE FROM BREWER'S SPENT GRAIN, METHOD AND APPARATUS FOR PRODUCING SAME**

(30) Priority: 19.10.2020 RU 2020134269
(71) Applicant: BioBo GmbH, 95460 Bad Berneck (DE)
(72) Inventor: GORDILOV, Oleg Grigorievich, g. Rostov-na-Donu, 344090 (RU)
(74) Representative: Spengler, Robert
(86) International application number: PCT/RU2021/000102
(87) International publication number: WO 2022/086363

(57) **Abstract**

The group of inventions relates to the food industry, namely, to a method and device for processing brewer's spent grains. The invention makes it possible to obtain a gluten-free protein drink with a protein content of at least 10.0 wt.% dry weight. The principle of the invention is based on the technology of preparing brewer's spent grains for the extraction of nutrients and their extraction by mechanical processing on the proposed industrial line. The essence of the method lies in the fact that brewer's spent grains are loosened on a vibrating screen, crushed in a colloid mill, with the addition of water in a ratio of 0.5:1 to 1:1 with respect to the grains, to obtain a paste-like homogeneous mass, and then this mass is processed in a screw extractor for further grinding and separation into 2 fractions, namely: a suspension with a water content of 90-95%, which all nutrients remain in, including the proteins of the brewer's spent grains, and crushed husks of the brewer's spent grains with a water content of 60-75% suitable for further industrial use. Then, the suspension is subjected to removing suspended particles to obtain the final product - vegetable milk (protein drink), which is pumped into a storage tank.

## Description

### Field of technology

This group of inventions relates to the food industry and concerns a technology for processing waste from the brewing industry, namely, a method and device for processing brewer's spent grains to produce a protein drink (vegetable milk), which can be used in food products with therapeutic, prophylactic and dietary properties. In particular, brewer's spent grain protein is of the most significant interest for use in sports and dietary nutrition.

### State of the art

Vegetable milk (beverage) is gaining more and more popularity every day. Despite milk of animal origin having long been present in the human diet, it is often necessary to reduce its consumption or refuse altogether. The cause for this may be lactose intolerance. Vegetable milk is derived from nuts (almond, pine, coconut, cashews, pistachios, macadamia, Brazil nuts, walnuts, pecans, chestnuts, and hazelnuts), from grains and legumes (rice, soy, oat, buckwheat, peas, spelled, barley, millet, quinoa, peanuts, teff, amaranth, etc.), from seeds (poppy, sesame, hemp, chia, sunflower, and pumpkin) by grinding until smooth, mixing with water, pressing and straining. The result is liquid resembling milk in appearance, which can be used as a milk substitute in cooking, culinary products, and tea or coffee additives.

Vegetable milk has a lot of useful properties, as it is made from natural plant products. So, it contains a lot of various substances necessary for the human body, such as: polyunsaturated fatty acids (PUFA), vitamins, micro- and macroelements. For example, 100 mL of the product "Nemoloko ovsyanoe" (Oatmeal non-milk) with an energy value of 150 kJ (35 kcal) contains 1 g of protein, 0.5 g of fat, 6.5 g of carbohydrates, and 0.08 g of salt.

Preparing an oat health drink is known from the prior art (EA20607), including making a suspension from an oat grain substrate, processing this suspension by adding thermostable α-amylase with heating up to a temperature of 90-95°C, keeping for 0.5-1.5 h, subsequent enzymatic hydrolysis at a temperature of 50-55°C by α-amylase (to form maltose during hydrolysis) and p-glucanase, separation of the liquid phase, and final inactivation of the enzymatic activity.

It is also known from the prior art how to prepare various liquid protein products from brewer's spent grains formed after beer production and containing many valuable nutritional components. Brewer's spent grains are obtained at the stage of filtration of sugared beer mash. The percentage of spent grains in beer production waste is at least 98 wt.%. Spent grains consist of liquid and solid phases. The solid phase, which is approximately 45% in spent grains, contains grain shells and particles of grain kernels. Spent grains contain fats, fiber, and amino acids, namely: histidine, lysine, leucine, isoleucine, methionine, valine, glycine, threonine, serine, alanine, arginine, phenylalanine, tyrosine, etc. Currently, brewer's spent grains in their native form are not widely used due to some difficulties of their transportation and storage - already at temperatures of 15-30°C, fermentation processes begin in spent grains after 6-8 h and they become unsuitable for processing and further use.

A protein drink made from a protein powder obtained from brewer's spent grains is known from the prior art (WO2018014020). The protein concentration in the powder is up to 50 wt.%. The technology for obtaining this powder includes adding an effective amount of protease to brewer's spent grains, heating the resulting composition up to a temperature from 20°C to 80°C and keeping at this temperature for 60 to 150 min to obtain a liquid fraction containing hydrolyzed proteins and solid fractions, separating the resulting liquid fraction, followed by drying to obtain a protein powder. The drink is then obtained by mixing the protein powder with water. However, the method is laborious due to the need for an additional technological step aimed at drying the intermediate product to powder. Besides, during the thermochemical treatment of brewer's spent grains, their useful components are partially lost.

Closest to the claimed invention is a liquid protein product and a method for its production from brewer's spent grains using a press-screw separator (https://science-engineering.ru/ru/article/view?id=1121). Source spent grains are processed on the press-screw separator, their liquid part (filtrate) is separated by mechanical squeezing with a screw device through a sieve with a mesh size of 0.5-0.75 mm, and dehydrated spent grains with a water content of 60-70% are resulted at the outlet of the separator. Spent grain filtrate is a turbid liquid containing 3-5% suspended solids (crushed grain shells) and a large amount of fine particles, proteins and polysaccharides, which are used as food or feed additives or are subjected to posttreatment using a centrifugal separator and a flotation machine. However, brewer's spent grains are not crushed before pressing, and part of the protein remains bound inside the compressed husk particles and, therefore, protein is lost during the subsequent removal of the husk. In addition, the resulting protein product is not subject to long-term storage due to there being no stage of antimicrobial treatment of the resulting product in the technological process.

Thus, all existing methods of processing brewer's spent grains, aimed at obtaining protein products, are characterized by a significant loss of protein. Besides, the known methods are mainly aimed at obtaining a product in the form of flour or concentrate from brewer's spent grains without isolating a ready-to-use product in the form of milk in the technological process, which would expand the line of dietary food products.

The technical problem solved by the claimed invention is elimination of the disadvantages inherent in the analogs listed above.

### Disclosure of invention

The technical result of the claimed group of inventions is obtaining a product of processing brewer's spent grains in the form of a bacteriologically pure drink (vegetable, barley milk) with a water (moisture) content of at least 97%, containing proteins of at least 10.0 wt.% dry weight, and fats of not more than 15.0 wt.% dry weight, as well as particles no larger than 0.1 mm.

The drink is a ready-to-use product or an intermediate one which can be concentrated to the desired protein concentration. It is obtained from brewer's spent grains within one technological cycle. During the production of this drink, separated suspended particles are formed, which can be dried and used as a protein mineral-vitamin supplement.

The technical result is achieved by a protein drink (beverage) obtained from brewer's spent grains, with a water content of at least 97%, particle sizes of not more than 0.1 mm and containing proteins of at least 10.0 wt.% dry weight, and fats of not more than 15.0 wt.% dry weight, while the content of unsaturated fatty acids is not less than 5 wt.% dry weight. Preferably, the protein content in the drink is 15.0-40.0 wt.% dry weight, and the fat content is 5.0-10.0 wt.% dry weight.

The technical result is also achieved by a method of obtaining the claimed protein drink, which includes loosening the source brewer's spent grains until a homogeneous mass is obtained, removal of mechanical inclusions (impurities), then grinding in a colloid mill with the addition of water until a pasty mass is obtained with a water (moisture) content of not more than 95%, then removing the crushed husk from the resulting mass to obtain a protein suspension, which suspended particles are removed from to obtain a protein drink, which is processed to suppress pathogenic microflora. The grinding of raw materials in the colloid mill is carried out to particle sizes within 0.1-0.9 mm at a rotor speed (rate) of 1,800-3,200 rpm. Husk removal after grinding in the colloid mill is carried out by means of a screw extractor; loosening to obtain a homogeneous mass and removal of mechanical inclusions are carried out using a vibrating screen (sieve) with hole size of between 6 and 10 mm, and a screen vibration frequency of between 10 and 50 Hz and an amplitude of between 2 and 20 mm. Water supply when loading brewer's spent grains into the colloid mill is carried out to ensure uniform moistening of the raw material over volume. To remove residual husk particles, the protein suspension is subjected to additional vibration filtration with screens having a hole size of between 0.1 and 0.5 mm. Suspended particles are removed from the protein suspension using a centrifuge, separator or flotator. To suppress pathogenic microflora, the protein drink is subjected to ultraviolet treatment or ultra-pasteurization, while the protein drink is pre-concentrated to obtain the required protein concentration.

Also, the technical result is achieved by an apparatus for obtaining the protein drink, containing the following parts connected in a technological sequence: a device for loosening brewer's spent grains and removing mechanical impurities therefrom; a grinder (grinding machine) designed to uniformly moisten the raw material in volume, grinding to obtain a pasty mass; an extractor designed to grind the mass to particle sizes of 0.01-0.5 mm and separate it into a suspension and a husk; a device for removing suspended particles; a device for processing the protein drink to suppress pathogenic microflora; and a storage container for the protein drink. The device for removing suspended particles from the protein suspension is made in the form of a centrifuge, separator or flotator; the device for suppressing pathogenic microflora is made in the form of an ultraviolet irradiator or ultrapasteurizer (ultrapasterization unit); a vibrating screen (sieve) with a magnetic catcher (trap) is used as the device for loosening and removing mechanical impurities; a colloid mill is used as the grinder, designed with the possibility of grinding the source brewer's spent grains down to fractions of 0.1-0.9 mm and equipped with a device (means) for supplying liquid to moisten the raw material; and a screw extractor capable of rotating at a rate of between 2 rot./minute and 8 rot./minute is used as the extractor. The vibration filter is made with the possibility of additional separation of the remaining husk particles from the resulting suspension and has the hole (mesh) size of between 0.1 mm and 0.5 mm. The vibrating screen (sieve) is used with the hole size of between 6 mm and 10 mm and the screen vibration frequency of between 10 Hz and 50 Hz and the amplitude of between 2 mm and 20 mm, the colloid mill has a V-shaped (funnel-shaped) tank, for uniform moistening of the raw material it contains a tool designed in the shape of a water pipeline with openings or nozzles located around the circumference of the tank in its upper part above the mark indicating the maximum tank load with raw materials. The apparatus may additionally contain a protein drink concentration unit.

### Brief description of the drawings

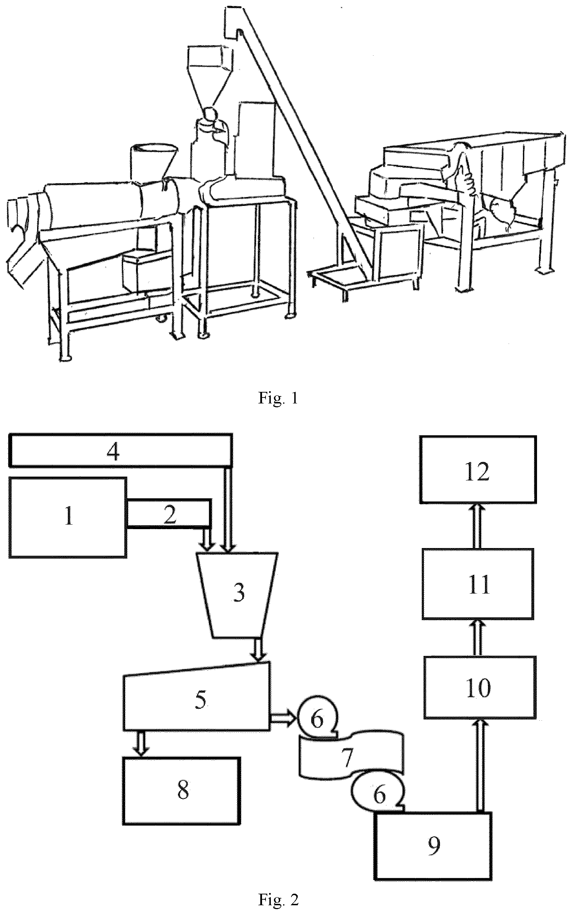

FIG. 1 is a schematic representation of a production (technological) line showing a part of the pilot production line comprising a vibrating screen (sieve), a conveyor, a colloid mill, and a screw extractor.
FIG. 2 is schematic representation of a production line for implementing a method according to the present technology, wherein 1 indicates a device for loosening brewer's spent grains and removing mechanical impurities therefrom (vibrating screen), 2 indicates a conveyor, 3 indicates a grinder (colloid mill), 4 indicates a water pipeline, 5 indicates a screw extractor, 6 indicates an impeller pump, 7 indicates a vibration filter, 8 indicates a storage (collection) tank for husks, 9 indicates a storage (collection) tank for protein suspension, 10 indicates a device for removing suspended particles (centrifuge, separator or flotator), 11 indicates a device for suppressing pathogenic microflora in the protein drink (ultraviolet irradiator or ultrapasteurization unit), and 12 indicates a container (tank) for the drink.

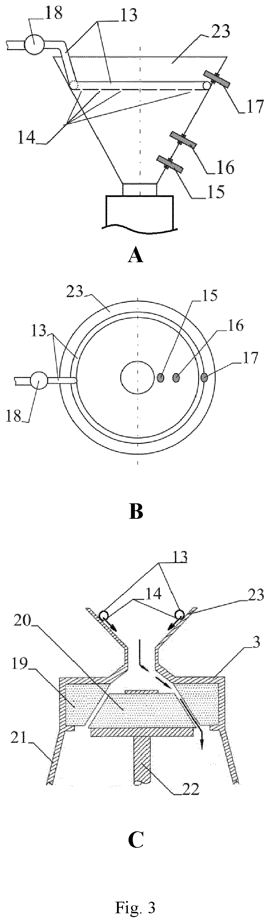

FIG. 3 is a schematic representation of a colloid mill's loading tank, A is the layout of structural elements in the colloid mill's loading tank, B is a top view of the loading tank, C indicates a cross-section diagram of the colloid mill, wherein 13 is an annular (circular) water pipeline, 14 are holes (openings) in the water supply pipeline, 15, 16, and 17 are level sensors (level-sensing devices), 18 is a water supply control valve, 19 is a stator, 20 is a rotor, 21 is a stator housing, 22 is a rotor shaft, and 23 is a loading tank of the colloid mill 3.

### Implementation of the invention

Below is a more detailed description of the claimed invention, which does not limit the scope of the claims, but demonstrates the possibility of implementation of the invention with the achievement of the claimed technical result.

The source brewer's spent grains with a water content of 70-90% are subjected to processing before the expiration of 3 h after their receipt (from the moment they were formed as a beer production waste). The temperature of the grains at the time of receipt from production facility varies from 2°C to 80°C. The brewer's spent grains are loaded manually or by any mechanized method onto the vibrating screen 1 (Figures 1 and 2) with the hole size of between 6 mm and 10 mm equipped with a magnetic catcher, where the grains are loosened and mechanical and metallic impurities are removed therefrom. The processing on the vibrating screen 1 consists in sieving the spent grains with a vibration frequency (sieve oscillation frequency) of 10 to 50 Hz with amplitude of 2-20 mm for 2-10 seconds to obtain raw materials without lumps having homogeneous composition for the further processing stage when the material is subject to grinding. It is possible to obtain a homogeneous mass with removal of mechanical impurities in the course of loosening the brewer's grains not only by means of a vibrating screen but also by means of any device or a set of devices known from the prior art which provides the mentioned functions. Further, the loosened brewer's spent grains are fed for grinding with the conveyor 2 to the colloid mill 3 (Figure 3) or any other grinder, which provides grinding to a fraction of 0.1-0.9 mm. In the process of loading raw materials in the colloid mill's tank (loading tank), water is gradually added to the loading tank of the colloid mill to ensure uniform moistening of the raw materials over volume, which can be carried out in continuous or pulsating modes. The amount of water supplied is typically between 0.5:1 and 1:1 by weight relative to the spent grains. The amount and rate of water supply can be calculated preliminary on the basis of the measured initial parameters of the moisture content of the brewer's spent grains received for processing, considering the loss of moisture when the spent grains are sifted through the vibrating screen. The moisture (water) content in the spent grains processed in the colloid mill should preferably be in the range of 90-95%. The spent grains are evenly mixed (and/or homogenized) in the colloid mill 3 until a paste-like homogeneous mass (pulp with a viscosity of preferably 750-1,400 cPa s) is obtained, which then moves by gravity into the screw extractor 5, where the mass is additionally ground and divided into a suspension with a moisture (water) content of 90-95% and a viscosity of 1.5-3 cPa·s, and husk with particle sizes of 0.01 mm to 1.0 mm and a moisture (water) content of 60-75%. The temperature of the spent grains processed in the colloid mill and screw extractor can be from 2°C to 90°C. The supply of spent grains to the colloid mill can be carried out by any means known from the prior art, for example, a screw, or a belt, or a scraper conveyor.

Grinding of brewer's spent grains in the colloid mill 3 occurs in the housing (shell) 21 between the working surfaces of the rotor 20 and stator 19, for example, when the rotor 20 of the mill rotates at a speed of 1,800-3,200 rpm (rot./second), which makes it possible to provide a thick, uniform, but sloppy consistency of the pulp for the maximum extraction of the nutrient fraction from the raw material at the screw extraction stage. Grinding of brewer's spent grains is carried out when water is supplied to the V-shaped (funnel-shaped) loading tank (receiving bunker) 23 of the colloid mill 3 via openings 14 of the water pipeline 13 located around the circumference of the tank in its upper part above the mark indicating the maximum load of the tank with raw materials. The amount of water supplied can be controlled using the valve 18. In the preferred embodiment of the invention, the openings (holes) 14 in the pipeline are evenly (uniformly) distributed along its length, which ensures uniform wetting (liquefaction) of the spent grains throughout the entire volume during processing.

After grinding in the colloid mill 3, the pulp is processed in the screw extractor 5 with a screw rotation rate of 2 rpm to 8 rpm, which allows quick (within 1-2 seconds) separating the food suspension from its waste product (the by-product of production) - barley's husk. To do this, the paste-like mass (pulp) produced by the colloid mill 3 flows by gravity into the screw extractor 5, where it is separated from the husk to obtain a food suspension with a moisture (water) content of not more than 95%, and a waste product (by-product of production) - barley husk with a moisture (water) content of 60-75% and husk particle sizes from 1.0 mm to 5.0 mm, which are collected in the storage tank 8. Since after processing the suspension in the screw extractor 5, 2-5% of fine husk with sizes from 0.01 to 1.0 mm is still left therein, the suspension is transferred by the impeller or other pump 6, designed to work with food suspensions with a degree of contamination of up to 5% with fine plant fractions with sizes of not more than 1.0 mm, to the next purification stage into the vibration filter 7 with filter mesh (holes) sizes of 0.2-0.5 mm, which allows almost complete removing the remaining husk from the food suspension, which still remains after the screw extraction stage. After the vibration filter 7, the suspension is pumped into the storage (collection) tank 9 with the impeller pump 6. The resulting protein suspension, containing 50-65 wt.% protein dry weight, is sent to the next stage of the technological cycle, i.e. to the device for removing suspended particles 10 to obtain the final product (milk). As the device for removing suspended particles 10, any device known from the prior art can be used, for example, a centrifuge, separator or flotation machine with a rotation speed of 1,500-6,500 rpm and a drive power of at least 7.4 kW (capacity of about 90 hL/h). The milk obtained after the device 10 can act as the final product (it can be packaged into containers with volumes of 50-500 ml for delivery to the consumer), or subjected to further concentration to obtain the required protein concentration. As a rule, before the drink is packaged, it is treated with the pathogen suppression device 11.

Sweeteners (carbohydrates), such as fructose, glucose, sucrose, trehalulose, isomaltose, isomelicytose, could be added to the drink depending on its purpose and specific use. Also, herbal components can be added to improve the taste, in particular extracts, solutions or essences from parts of various plants, such as, for example, anise, valerian root, nettle, blackberry leaves, strawberry leaves, fennel, cuff, gooseweed, ginseng, rosehips, hibiscus flowers, raspberry leaves, elderberry, hops, ginger, St. John's wort, chamomile, coriander, spearmint, Indian jasmine (Lapacho), lavender, lemongrass (Limonen-Gras), marjoram, mallow, lemon balm, mistletoe, peppermint, calendula, rosemary, gentian, yarrow, thyme, hyssop, cinnamon, etc.; or fruit components according to the invention, in particular extracts from fruits such as apples, bananas, pears, pineapples, oranges, grapefruits, cherries and common cherries, lemons, citrus fruits, passion fruit, peaches, sea buckthorn, raspberries, strawberries, blackberries, currants, gooseberries, kiwi fruit, etc.; as well as natural or nature-identical substances to impart odor and/or taste, such as essential oils from plants or fruits, such as lemon oil, mint oil or clove oil, fruit essences to impart the aroma of fruit juices, anise, menthol, eucalyptus, etc. Natural or synthetic dyes can be used as coloring agents for color correction and/or for achieving an appropriate appearance. Coloring components can be, for example, pigments of plant origin, such as carotenoids, flavonoids or anthocyanins; animal dyes; inorganic pigments such as iron oxide pigment; products of enzymatic and non-enzymatic browning, pasteurization products such as caramelized sugar; or synthetic dyes such as azo compounds, triphenylmethane compounds, indigoid compounds, xanthene compounds or quinoline compounds. Suitable synthetic dyes are, for example, erythrosine, indigo kamine or tartrazine. To enrich the composition of the drink, vitamins and microelements can be additionally added. As amino acid components, mixtures of essential amino acids can be added, which are not synthesized in the human body or can only be produced at an insufficient rate and therefore must be supplied with food. Essential amino acids, in particular, are His, Ile, Leu, Lys, Thr, Trp, and Val. Acids can be added as acidic components, which either add a sour taste to the drink according to the invention and/or improve its storage stability. Preferably food acids are, in particular, citric acid, malic acid, lactic acid, tartaric acid and the like. The drink according to the invention, in a preferred embodiment, can also be in the form of a carbonated beverage, i.e. it may contain carbonic acid or carbon dioxide.

Husk is a by-product (waste product) of the processing of brewer's spent grains and, during the operation of the screw extractor, spontaneously pours (falls) into the collection bunker (storage bin), from which it is transferred to the collection (storage) tank 8 by a screw conveyor, or a spiral conveyor or any other conveyor.

The resulting protein drink is characterized by a moisture (water) content of at least 97%, particle sizes of not more than 0.1 mm, contains proteins of at least 10.0 wt.% dry weight, and fats of not more than 15.0 wt.% dry weight, while the content of unsaturated fatty acids is not less than 5.0 wt.% dry weight. It is preferable to obtain the drink with a protein content of 15.0-40.0 wt.% dry weight and fat 5.0-10.0 wt.% dry weight.

The protein drink is characterized by high biological and nutritional value and good digestibility, mild taste, with notes of fried bread, as well as a homogeneous consistency. Its color is from white to white with a grayish tint. During storage, the formation of small sediment is allowed, which would affect neither organoleptic properties nor nutritional value of the product.

Below is a specific example of obtaining the protein drink in a volume of 200 liters. For this purpose, 260 kg of brewer's spent grains with a water content of 75.59% was manually loaded onto the vibrating screen 1, which was implemented as a vibrating table XFZ1020 with a single-level sieve (screen) with a mesh of 10 mm, table length 2,000 mm, table width 1,000 mm, vibration frequency 20 Hz, and amplitude vibration 8 mm. From the vibrating sieve 1, the mass was fed by the belt conveyor 2 to the colloid mill 3, which was implemented as a KDDJ-1.5 device with a power capacity of 11 kW with the rotation rate of 2,200 rpm of the rotor 20, which was also equipped with a means of supplying drinking water from the block 4. In the colloid mill, the brewer's spent grains were moistened with water, whose estimated amount was 170 liters (0.67:1), and which entered the colloid mill at a rate of 15 liters per minute, and the moistened spent grains were crushed (grinded) to a fraction size of 0.1-0.9 mm. The process of supplying the source raw materials and water to the loading tank 23 of the colloid mill 3 was controlled using the three level sensors 15, 16 and 17 built into the body of the loading tank 23 and a microcontroller located in close proximity to the level sensors on the frame of the table on which the colloid mill was installed. One of the sensors (the top one 17) was used to control the maximum possible level of loading of raw materials into the bunker (85-90 vol.% of the maximum bunker capacity), upon reaching which a command was given to stop the loading conveyor; the second sensor (the medium one 16) was used to control the minimum level of loaded raw materials (25-30 vol.% of the maximum capacity of the bunker), upon reaching which a command was given to turn on the loading conveyor and feeding raw materials into the loading bunker, which ensured the continuous operation of the colloid mill. The third sensor (the lower one 15) was installed at the bottom of the loading bunker, at a distance of 15 cm from its bottom, to control the minimum possible amount of raw materials in the bunker (10-15 vol.% of the maximum bunker capacity), below which the operation of the colloid mill stopped until the next lots of raw materials. The resulting pulp with a viscosity of 900-1,200 cP and a water content of 95% after the colloid mill entered the screw extractor 5, which was implemented as a KDLZ-1.5 unit with a power capacity of 4 kW with a rotation rate of 4.5-10 rpm, at the exit from which the main production product was obtained - a food suspension with a water content of 95%, a viscosity of 2.013 cP, and a by-product of production (waste product) - barley husk with a water content of 70.84%. The food suspension was supplied by means of the impeller pump 6 with a power capacity of 0.25 kW and a rotation rate of 1,200 rpm to the vibration filter 7 of the XZS-1200-1S model with a power capacity of 0.75 kW with 0.3 mm openings and after filtration, by means of the impeller pump 8 with a power capacity of 0.25 kW and a rotation rate of 1,200 rpm was pumped into the storage (collection) tank 9. The husk spontaneously poured into the storage (collection) tank 8. Thus, a food suspension with a water content of 93%, a viscosity of 1.907 cP and particle sizes of 0.005-0.3 mm was obtained. Vegetable milk was obtained by separating suspended particles from the suspension using a centrifuge, which was implemented as a LGZ/PGZ800 filter centrifuge with an engine power of 7.5 kW and a maximum rotation rate of 1,500 rpm.

To evaluate the resulting composition, 12 liters of the vegetable milk were dried in an HT-RY1500 spray dryer at 200°C for 8 hours to a moisture content of 4.97% (the HT-RY1500 spray dryer capacity is 1,500 ml of suspension per hour). The analysis showed that the obtained vegetable milk (sample 1) was characterized by the following composition, wt.% dry weight (Table 1).

**Table 1**

| Indicator | Documentation for test method | Dry milk (sample 1) |
|---|---|---|
| Digestibility (%) | Method for determining *in vitro* digestibility | 95.74 |
| Humidity, % | | 4.97 |
| Crude protein content, % dry weight | | 34.66 |
| Mass fraction of sugar, % | GOST26176-91 | 2.1 |
| Mass fraction of starch, % | GOST26176-91 | 12.4 |
| Mass fraction of crude fat, % | GOST13496.15-2016 | 10.14 |
| Mass fraction of each fatty acid to the total amount of fatty acids (%) | GOST30418-96 | |
| Myristic acid (C14:0) | | 0.04 |
| Palmetine acid (C16:0) | | 2.36 |
| Palmitoleic acid (C16:1) | | 0.02 |
| Stearic acid (C18:0) | | 0.34 |
| Oleic acid (C18:1) | | 1.31 |
| Linoleic acid (C18:2) | | 5.50 |
| Linolenic acid (C18:3) | | 0.45 |
| Arachinoic acid (C20:0) | | 0.02 |
| Eicosene (gondoic) acid (C20:1) | | 0.05 |
| Behenic acid (C22:0) | | 0.02 |
| Erucic acid (C22:1) | | 0.02 |

The total processing time for 260 kg of brewer's spent grains was 25 minutes.

Thus, the protein drink obtained by the claimed method is characterized by a high protein content while preserving the amino acid composition of spent grains, as well as low fat and fiber contents. The method is simple to perform, not time-consuming since the time from loading raw materials in the machine to obtaining the final product in the form of suspension, for example, when calculated per 100 kg of brewer's spent grains, is from 5 to 10 minutes with the equipment's capacity from 20 to 500 tonnes/day.

Brewer's grains delivered from five different manufacturing facilities (sample) were processed by this equipment in accordance with the method of the present technology. The quantitative content of the components in the composition of brewer's spent grains differed from the initial (original) composition given in Table 1 within 1-5%. Table 2 shows the compositions of vegetable milk with the most optimal content of its key components.

**Table 2**

| Composition | Drink | | | | |
|---|---|---|---|---|---|
| | sample 2 | sample 3 | sample 4 | sample 5 | sample 6 |
| | Content (wt.%) | | | | |
| Digestibility (%) | 95.0 | 97.0 | 95.4 | 94.7 | 93.8 |
| Humidity, % | 5.00 | 4.7 | 5.1 | 4.9 | 4.92 |
| Crude protein content, % dry weight | 36.47 | 12.5 | 39.6 | 26.8 | 30.5 |
| Mass fraction of sugar, % | 1.5 | 0.5 | 1.3 | 0.9 | 1.55 |
| Mass fraction of starch, % | 10.1 | 4.7 | 12.3 | 6.1 | 9.6 |
| Mass fraction of crude fat, % | 9.26 | 4.98 | 10.38 | 5.98 | 9.5 |
| Myristic acid (C14:0) | 0.03 | 0.01 | 0.037 | 0.011 | 0.02 |
| Palmetine acid (C16:0) | 2.3 | 1.46 | 2.26 | 2.0 | 1.950 |
| Palmitoleic acid (C16:1) | 0.01 | 0.014 | 0.022 | 0.009 | 0.018 |
| Stearic acid (C18:0) | 0.29 | 0.17 | 0.36 | 0.24 | 0.25 |
| Oleic acid (C18:1) | 1.13 | 0.61 | 1.37 | 1.09 | 1.03 |
| Linoleic acid (C18:2) | 5.1 | 2.54 | 5.42 | 3.53 | 5.05 |

| Composition | Drink | | | | |
|---|---|---|---|---|---|
| | sample 2 | sample 3 | sample 4 | sample 5 | sample 6 |
| Linolenic acid (C18:3) | 0.35 | 0.18 | 0.49 | 0.18 | 0.5 |
| Arachinoic acid (C20:0) | 0.015 | 0.01 | 0.024 | 0.007 | 0.012 |
| Eicosene (gondoic) acid (C20:1) | 0.03 | 0.017 | 0.025 | 0.04 | 0.04 |
| Behenic acid (C22:0) | 0.01 | 0.009 | 0.022 | 0.009 | 0.017 |
| Erucic acid (C22:1) | 0.03 | 0.015 | 0.032 | 0.04 | 0.02 |

Based on the above data it can be concluded that a protein drink in the form of high-protein milk is produced despite the fact that various plants use different types of barley, have various technologies for manufacturing brewer's malt, various malt mix recipes for manufacturing beer etc. The two-stage processing of spent grains (in the colloid mill and the screw extractor) without the use of multi-stage processes of pressing, drying, chemical-thermal treatment makes it possible to obtain a gluten-free protein drink with a protein content of at least 10.0 wt.% dry weight.

The results of our microbiological study of the obtained vegetable milk before and after its treatment with an OTL-M-K4 ultraviolet irradiator (the exposure of UV irradiation being 250 mJ/cm² for 15 seconds) are presented in Table 3.

**Table 3**

| Sample | Coliform bacteria (bacteria of the *Escherichia coli* group) | QMAFAnM (quantity of mesophilic aerobic and facultative anaerobic microorganisms or total bacterial load) |
|---|---|---|
| | CFU/ml | CFU/ml |
| **Normal for biologically active supplements** | **0.1** | **1·10⁴** |
| Milk before UV treatment | Found in 0.00001 mL | Over 1·10⁶ |
| Milk after UV treatment | Not detected in 1 mL | Less than 1·10¹ |
| UV-treated milk after 3 days of storage | Not detected in 1 mL | None |
| UV-treated milk after 5 days of storage | Not detected in 1 mL | None |

Thus, the protein drink obtained by the claimed method is characterized by the absence of coliform bacteria and a minimum content of QMAFAnM, which increases its shelf life up to 12 months. After opening the package, the product is stored at a temperature of 2-8°C for up to 7 days.

Table 4 shows the processing parameters of brewer's spent grains (samples 2-6).

**Table 4**

| Equipment | Processing parameters | | | | |
|---|---|---|---|---|---|
| | sample 2 | sample 3 | sample 4 | sample 5 | sample 6 |
| Colloid Mill/ Rotor Speed (r/s) | 1,800 | 3,000 | 2,500 | 2,000 | 3,200 |
| Vibrating screen Screen opening (hole) size (mm) / vibration frequency (Hz and mm) | 10/10. 15 | 5/40. 10 | 7/30. 20 | 8/20. 15 | 6/50. 8 |
| Screw extractor / rotation rate (rpm) | 3 | 8 | 5 | 7 | 10 |
| Filtration / hole (mesh) size (mm) | 0.5 | 0.1 | 0.3 | 0.4 | 0.1 |

The method of obtaining the barley drink from brewer's spent grains is universal and allows preserving all the valuable biologically active components of the source brewer's spent grains to the maximum. The rich chemical composition of brewer's spent grains with a minimum carbohydrate content predetermines the prospects for use in the food industry, in particular, in the production of flour confectionery, for making cereals, smoothies, etc. instead of animal milk, and it can also be added to coffee or tea.

## Claims

1. A protein drink obtained from brewer's spent grains, the protein drink having a moisture content of at least 97%, a particle size of not more than 0.1 mm and comprises proteins of at least 10.0 wt.% dry weight and fats of not more than 15.0 wt.% dry weight, wherein the content of unsaturated fatty acids is not less than 5.0 wt.% dry weight.

2. The protein drink according to claim 1, wherein the protein content is between 15.0 and 40.0 wt.% dry weight, the fat content is between 5 and 10.0 wt.% dry weight.

3. A method for producing the protein drink according to claim 1, the method comprising loosening brewer's grains to obtain a homogeneous mass, removing mechanical impurities from the homogeneous mass, subjecting the homogeneous mass to grinding by a colloid mill with addition of water to produce a pasty mass having a moisture content of not more than 95%, removing ground husk from the pasty mass to obtain a protein suspension, removing suspended particles from the protein suspension to obtain a protein drink, processing the protein drink to suppress pathogenic microflora.

4. The method according to claim 3, wherein the grinding by the colloid mill is performed to particle size of between 0.1 mm and 0.9 mm.

5. The method according to claim 3, wherein a rotor speed of the colloid mill is between 1,800 rpm and 3,200 rpm.

6. The method according to claim 3, wherein removing the husk after grinding in the colloid mill is performed by means of a screw extractor.

7. The method according to claim 3, wherein the addition of the water is for homogeneous humidification of the brewer's grains in a volume.

8. The method according to claim 3, wherein the loosening brewer's grains and the removing mechanical impurities are performed by means of a vibrating screen with hole size of between 6 and 10 mm, and a screen vibration frequency of between 10 Hz and 50 Hz and an amplitude of between 2 mm and 20 mm.

9. The method according to claim 3, wherein the protein suspension is subjected to additional vibration filtration through screens having a hole size of between 0.1 and 0.5 mm to remove residual husk particles.

10. The method according to claim 3, wherein the removing the suspended particles is performed by means of a centrifuge, separator or flotator.

11. The method according to claim 3, wherein the processing the protein drink comprises ultraviolet treatment or ultra-pasteurization to suppress pathogenic microflora.

12. The method according to claim 3, further comprising concentrating the protein drink before the processing to obtain required protein concentration.

13. An apparatus for producing the protein drink according to claim 1, the apparatus comprising: a device for loosening brewer's spent grains and removing mechanical impurities therefrom; a grinder adapted for uniform humidification of raw materials in volume, grinding these materials and producing a pasty mass; an extractor adapted for grinding the pasty mass to produce particles having a particle size of between 0.01 and 0.5 mm and for obtaining a suspension and a husk; a device for removing suspended particles from the protein suspension to obtain a protein drink; a device for processing the protein drink to suppress pathogenic microflora; and a storage tank for the protein suspension.

14. The apparatus according to claim 13, wherein the device for removing suspended particles from the protein suspension comprises a centrifuge, separator or flotator.

15. The apparatus according to claim 13, wherein the device for processing the protein drink to suppress pathogenic microflora comprises an ultraviolet irradiator or an ultra-pasteurization installation.

16. The apparatus according to claim 13, further comprising a vibration filter with hole size of between 0.1 and 0.5 mm designed for separation of remaining husk particles from the suspension.

17. The apparatus according to claim 13, wherein the device for loosening and removing mechanical impurities comprises a vibrating screen with a magnetic catcher.

18. The apparatus according to claim 17, wherein the vibrating screen has a hole size of between 6 and 10 mm and a screen vibration frequency of between 10 and 50 Hz and an amplitude of between 2 and 20 mm.

19. The apparatus according to claim 13, wherein the grinder comprises a colloid mill, designed for grinding the source brewer's spent grains to a fraction of 0.1-0.9 mm, wherein the colloid mill comprises a device supplying liquid for humidifying raw materials.

20. The apparatus according to claim 19, wherein the colloid mill comprises a V-shaped loading tank, wherein the V-shaped tank has a mark indicating the maximum tank load with raw materials and a water pipeline-shaped tool with openings or nozzles located around the upper circumference of the tank above the mark, for achieving uniform humidification of the raw materials.

21. The apparatus according to claim 13, wherein the extractor comprises a screw extractor with a screw rotation speed of 2 rpm to 8 rpm.

22. The apparatus according to claim 13, further comprising a protein drink concentration unit.
